# EUROPÄISCHE PATENTSCHRIFT

(11) **EP 2 910 419 B1**
(45) Veröffentlichungstag und Bekanntmachung des Hinweises auf die Patenterteilung: **14.12.2016**
(21) Anmeldenummer: 15155331.0
(22) Anmeldetag: 17.02.2015
(51) Int. Cl.: B60P 7/08, B60P 3/14

(54) **Verankerungselement für T-Nuten**
Anchoring element for T grooves
Élément d'ancrage pour des rainures en T

(30) Priorität: 17.02.2014 DE 202014001329 U
(43) Veröffentlichungstag der Anmeldung: 26.08.2015
(73) Patentinhaber: Blomberger Holzindustrie B. Hausmann GmbH & Co. KG, 32825 Blomberg (DE)
(72) Erfinder: Bernd, Unruhe, 33039 Nieheim (DE); Geise, Olaf, 32816 Schieder-Schwalenberg (DE)
(74) Vertreter: Brandt, Detlef

(56) Entgegenhaltungen:
- US-A1- 2005 175 426

## Beschreibung

### Technisches Umfeld

Die Erfindung betrifft ein Verankerungselement für T-Nuten in Bodenplatten von Nutzfahrzeugen zur Festlegung von Bauteilen wie Einbauschränken oder ähnlichem mit einer in die T-Nut einsetzbaren Grundplatte und einem an der Grundplatte festlegbaren und mit den Bauteilen koppelbaren Verschreibungsteil, wie z.B. offenbart in US 2005/0175426 A1.

### Stand der Technik

Verankerungselemente der eingangs geschilderten gattungsgemäßen Art sind als sogenannte T-Nut-Steine seit langem aus dem Stand der Technik bekannt und werden in zahlreichen Bereichen der Technik, wie auch beispielsweise im Fahrzeugbau eingesetzt. Ein Anwendungsbereich für den Einsatz derartiger Nutsteine bildet der nachträgliche Innenausbau von Nutzfahrzeugen. Zahlreiche Nutzfahrzeuge werden als Werkstattwagen verwendet und mit einer aus Regalen, Schränken u.s.w. bestehenden kompletten Werkstatt ausgestattet. Für diese Art der Nutzung hat sich eine breite Zulieferindustrie entwickelt, die jeweils ihre eigenen Schranksysteme anbietet. Diese Schranksysteme unterscheiden sich nicht nur hinsichtlich ihrer Außenmaße und Verwendung, sondern auch hinsichtlich ihrer Befestigungslöcher, durch die eine Verschraubung mit dem Bodenbereich der Nutzfahrzeuge vorgenommen wird.

Die Bodengruppen von Nutzfahrzeugen werden in aller Regel nach der Produktion durch den Fahrzeughersteller mit zusätzlichen Einlegeböden versehen. Diese Einlegeböden haben die Funktion, eine ebene Ladefläche auf den oftmals vorhandenen Sickenblechen der Karosserie zu bilden und darüber hinaus die Ladefläche vor Beschädigungen zu schützen. Darüber hinaus werten sie das Fahrzeug optisch auf und können bei Beschädigungen oder Verschleiß leicht ausgetauscht oder nach Ende der Leasingzeit ganz entfernt werden.

Da - wie oben beschrieben - die einzelnen Schranksysteme unterschiedliche Befestigungsraster aufweisen, hat sich bislang in der Praxis die Ausstattung der Nutzfahrzeuge mit unterschiedlichen Bodenplatten und darin angeordneten T-Nuten etabliert, die jeweils auf bestimmte Schrankhersteller zugeschnitten sind, da die Herstellung eines universalen Einlegebodens dergestalt, dass verschiedene Fahrzeugausstatter ihre Schränke montieren können, nahezu unmöglich ist, ohne Zusatzarbeiten vorzunehmen wie den Einlegeboden zu demontieren, zu bearbeiten oder eigene Befestigungselemente für die Schränke am Einlegeboden festzulegen.

### Aufgabe der Erfindung

Aufgabe der Erfindung ist es daher, ausgehend von der oben geschilderten Problematik bei der Ausstattung von Nutzfahrzeugen ein Verankerungselement für T-Nutzen der eingangs geschilderten gattungsgemäßen Art so weiter zu entwickeln, dass unterschiedliche Lochraster zur Schrankbefestigung realisiert werden können, ohne dass aufwändige Montagenacharbeiten an den Bodenplatten durchgeführt werden müssen.

### Lösung der Aufgabe

Die gestellte Aufgabe wird erfindungsgemäß durch die im kennzeichnenden Teil des Anspruches 1 offenbarte technische Lehre gelöst.

Erfindungswesentlich dabei ist es, dass die Grundplatte des Verankerungselementes eine zum Boden der T-Nut geöffnete Ausnehmung aufweist, in der ein Halteteil verschieblich im Montagezustand des Verankerungselementes im Wesentlichen rechtwinklig zur T-Nut-Längsachse angeordnet ist, wobei das Verschraubungsteil von der Oberseite der Grundplatte durch eine Langlochausnehmung, deren Längsachse rechtwinklig zur Längsachse der T-Nut verläuft, in das Halteteil einschraubbar ist.

Durch die spezielle konstruktive Gestaltung ist es nunmehr möglich, eine Verschieblichkeit des Befestigungspunktes für einen Schrank oder ähnliches nicht nur in Längsrichtung der T-Nut durch Verschiebung des Verankerungselementes insgesamt entlang der Längsachse der T-Nut frei zu wählen, sondern auch eine Verschieblichkeit des durch das Verankerungselement definierten Befestigungspunktes quer, d.h. rechtwinklig zur T-Nut-Längsachse bereitzustellen.

Auf diese Weise lassen sich unterschiedliche Rastermaße von Schrankelementen oder anderen Einbauten an vorkonfektionierten Bodenplatten für Nutzfahrzeugen befestigen, in die bereits T-Nuten vorhanden sind. Die üblichen Vorteile herkömmlicher T-Nutsteine dergestalt, dass diese von oben in die entsprechende T-Nut eingesetzt und durch eine 90 º Drehung in die H interschneidung der T-Nut eingeführt werden können, bleibt dabei erhalten.

Besondere Ausgestaltungen des Gegenstandes der Erfindung ergeben sich zusätzlich zu der technischen Lehre des Anspruches 1 aus den Merkmalen der auf den Hauptanspruch rückbezogenen Unteransprüche.

Um eine ausreichende Verschieblichkeit des durch das Verankerungselement definierten Befestigungspunktes quer zur T-Nut-Längsachse zu gewährleisten, hat es sich als vorteilhaft erwiesen, wenn das Breitenmaß der Ausnehmung mindestens der doppelten Breite des Halteteiles entspricht. Ein leichteres Einsetzen des erfindungsgemäßen Verankerungselementes in die T-Nut wird entsprechend einer zweckmäßigen Weiterbildung dadurch erreicht, dass die Grundplatte an mindestens zwei Ecken ihres Grundrisses abgerundet ist.

Als Herstellungsmaterial hat sich für die grundplatte und das Halteteil Aluminium als zweckmäßig erwiesen.

### Figurenbeschreibung

Nachfolgend wird ein Ausführungsbeispiel des Gegenstandes der Erfindung anhand der beigefügten Zeichnungen näher erläutert. Es zeigt:

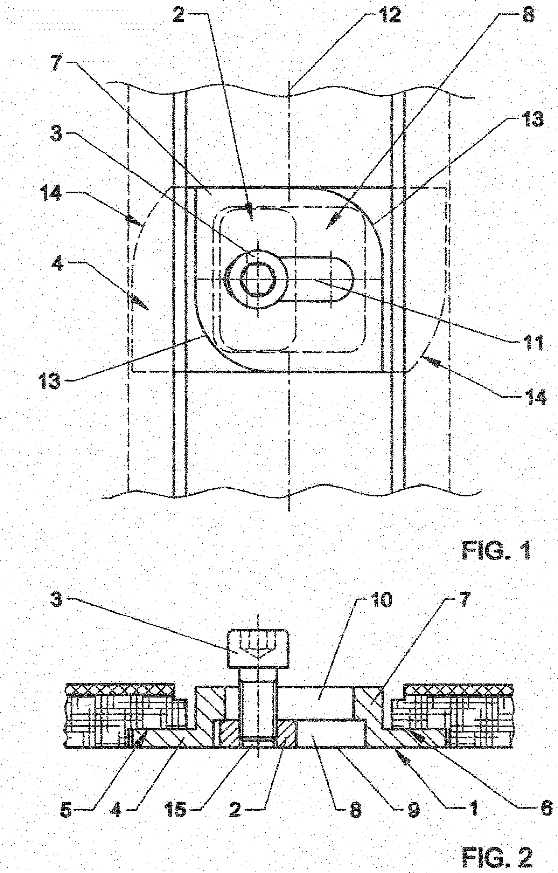

- Figur 1: eine Draufsicht auf die Verankerungselement im in die T-Nut eingesetzten Zustand und
- Figur 2: eine Schnittdarstellung durch ein in eine T-Nut eingesetztes erfindungsgemäßes Verankerungselement.

Das erfindungsgemäße Verankerungselement besteht im Wesentlichen aus drei Teilen. Die zum Verankerungselement gehörende Grundplatte 1 und ein Verschraubungsteil 3, beispielsweise in Form einer Imbusschraube, sind auch Bestandteil eines herkömmlichen aus dem Stand der Technik bekannten T-NutSteines. Die Grundplatte besitzt einen Bodenbereich 4, welcher in seiner Breite so bemessen ist, dass seine äußeren Randbereiche die Hinterschneidungen 5, 6 der T-Nut hintergreifen. Die Längserstreckung des Bodenbereiches ist so gewählt, dass die Grundplatte 1 in die nach oben zeigende Öffnungsnut der T-Nut eingesetzt werden kann. Zur Grundplatte 1 gehört darüber hinaus ein über den Bodenbereich 4 nach oben vorstehendes Kopfteil 7. Dieses Kopfteil 7 ist im Grundriss im wesentlichen quadratisch ausgeführt und so bemessen, dass seine Kantenlänge der Breite der T-Nut entspricht. In diesem Kopfteil befindet sich bei herkömmlichen T-Nut-Steinen das Aufnahmegewinde für das Verschraubungsteil 3.

Erfindungsgemäß besitzt die Grundplatte im Bereich des Kopfteiles 7 eine zur Unterseite geöffnete Ausnehmung 8. An der der unteren Öffnung 9 abgewandten Oberseite der Ausnehmung 8 ist diese mit einer Langlochausnehmung 10 versehen, die bis zur Aussenseite des Kopfteiles 7 reicht. Die Anordnung der Langlochausnehmung 10 ist so gewählt, dass deren Mittellängsachse 11 im Wesentlichen rechtwinklig zur Längsachse 12 der T-Nut angeordnet ist.

Sowohl das Bodenteil 4 als auch das Kopfteil 7 der Grundplatte 1 sind in zwei gegenüberliegenden Eckbereichen mit Abrundungen 13, 14 versehen, die eine 90 º Drehung der Grundplatte 1 mit dem Kopfteil 7 nach dem Einsetzen in die T-Nut innerhalb von dieser ermöglichen.

Für die erfindungswesentliche Ausbildung besteht das Verankerungselement neben der Grundplatte 1 und dem Verschraubungsteil 3 zusätzlich aus einem Halteteil 2, welches in der Ausnehmung 8 der Grundplatte 1 angeordnet ist. Im Halteteil 2 befindet sich eine Gewindebohrung 15, in die das Verschraubungsteil 3 respektive die Gewindeschraube nach dem Zusammenbau von Grundplatte 1 und Halteteil 2 eingeschraubt wird. Das Halteteil 2 ist so ausgebildet, dass es höchstens halb so breit ist wie die Ausnehmung 8 in der Grundplatte 1. Durch die Langlochausnehmung 10 in Verbindung mit der reduzierten Breite des Halteteiles 2 ist dieses nach Zusammenbau mit dem Verschraubungsteil 3 innerhalb der Ausnehmung 8 quer zur Längsachse der T-Nut verschieblich. Es ergibt sich somit insgesamt eine Beweglichkeit des durch die Gewindebohrung 15 des Verankerungselementes definierten Befestigungspunktes längs und quer zur T-Nut, so dass unterschiedliche Lochraster zur Schrankbefestigung realisiert werden können.

Das Verankerungselement wird vorteilhafterweise aus Aluminium hergestellt, wobei für den Einsatz des Verschraubungsteils 3 Schrauben mit unterschiedlichem Kopfteil Verwendung finden.

### Bezugszeichenliste:

- 1: Grundplatte
- 2: Halteteil
- 3: Verschraubungsteil
- 4: Bodenteil
- 5: Hinterschneidung
- 6: Hinterschneidung
- 7: Kopfteil
- 8: Ausnehmung
- 9: Öffnung
- 10: Langlochausnehmung
- 11: Mittellängsachse
- 12: Längsachse
- 13: Abrundung
- 14: Abrundung
- 15: Gewindebohrung

## Patentansprüche

1. Verankerungselement für T-Nuten in Bodenplatten von Nutzfahrzeugen zur Festlegung von Bauteilen wie Einbauschränken oder ähnlichem mit einer Grundplatte und einem an der Grundplatte festlegbaren und mit den Bauteilen koppelbaren Verschraubungsteil,
**dadurch gekennzeichnet, dass**
die Grundplatte (1) eine zum Boden der T-Nut geöffnete Ausnehmung (8) aufweist, in der ein Halteteil (2) verschieblich im Montagezustand des Verankerungselementes im wesentlichen rechtwinklig zur T-Nut-Längsachse (12) angeordnet ist, wobei das Verschraubungsteil (3) von der Oberseite der Grundplatte (1) durch eine Langlochausnehmung (10), deren Mittellängsachse (11) rechtwinklig zur Längsachse (12) der T-Nut verläuft, in das Halteteil (2) einschraubbar ist.

2. Verankerungselement nach Anspruch 1,
**dadurch gekennzeichnet, dass**
das Breitenmaß der Ausnehmung (8) mindestens der doppelten Breite des Halteteiles (2) entspricht.

3. Verankerungselement nach Anspruch 1 oder 2,
**dadurch gekennzeichnet, dass**
die Grundplatte (1) an mindestens zwei Ecken ihres Grundrisses mit Abrundungen (13, 14) versehen ist.

## Claims

1. Anchoring element for T-slots in floor plates of utility vehicles for fixing components such as built-in cupboards or the like by means of a baseplate and a screw-connection part which can be fixed to the baseplate and coupled to the components,
**characterised in that**
the baseplate (1) has a recess (8), which is open towards the base of the T-slot and in which a holding part (2) is arranged so as to be displaceable substantially perpendicular to the longitudinal axis (12) of the T-slot when the anchoring element is mounted, the screw-connection part (3) being able to be screwed into the holding part (2) from the upper face of the baseplate (1) through a slot recess (10), the central longitudinal axis (11) of which extends perpendicular to the longitudinal axis (12) of the T-slot.

2. Anchoring element according to claim 1,
**characterised in that**
the width dimension of the recess (8) is at least twice the width of the holding part (2).

3. Anchoring element according to either claim 1 or claim 2,
**characterised in that**
the baseplate (1) is provided with roundings (13, 14) on at least two corners of the footprint thereof.

## Revendications

1. Élément d'ancrage pour rainures en T dans des planchers de véhicules utilitaires destiné à fixer des éléments tels que des placards ou analogues avec une plaque de base et une pièce de vissage pouvant être fixée sur la plaque de base et pouvant être couplée aux éléments, **caractérisé en ce que** la plaque de base (1) présente une ouverture (8) au fond de la rainure en T dans laquelle une pièce de retenue (2) est agencée de manière coulissante, à l'état monté de l'élément d'ancrage, sensiblement perpendiculairement à l'axe longitudinal (12) de la rainure en T, la pièce de vissage (3) pouvant être vissée dans la pièce de retenue (2) depuis la partie supérieure de la plaque de base (1) par une ouverture allongée (10) dont l'axe longitudinal central (11) est perpendiculaire à l'axe longitudinal (12) de la rainure en T.

2. Élément d'ancrage selon la revendication 1, **caractérisé en ce que** la largeur de l'ouverture (8) correspond au moins à deux fois la largeur de la pièce de retenue (2).

3. Élément d'ancrage selon la revendication 1 ou 2, **caractérisé en ce que** la plaque de base (1) est munie d'arrondis (13, 14) sur au moins deux coins de son tracé.
